# EUROPÄISCHE PATENTSCHRIFT

(11) **EP 3 025 417 B1**
(45) Veröffentlichungstag und Bekanntmachung des Hinweises auf die Patenterteilung: **12.09.2018**
(21) Anmeldenummer: 14731966.9
(22) Anmeldetag: 23.06.2014
(51) Int. Cl.: H02K 5/22, H02K 3/38, H02K 3/52

(54) **ELEKTRISCHE MASCHINE**
ELECTRIC MACHINE
MOTEUR ÉLECTRIQUE

(30) Priorität: 23.07.2013 DE 102013214386
(43) Veröffentlichungstag der Anmeldung: 01.06.2016
(73) Patentinhaber: ZF Friedrichshafen AG, 88046 Friedrichshafen (DE)
(72) Erfinder: RAUCH, Matthias, 97447 Frankenwinheim (DE); ZIMMER, Manfred, 97475 Zeil (DE); BRÜCKNER, Christian, 97222 Rimpar (DE)
(86) Internationale Anmeldenummer: PCT/EP2014/063127
(87) Internationale Veröffentlichungsnummer: WO 2015/010838

(56) Entgegenhaltungen:
- EP-A2- 1 677 404
- FR-A1- 2 530 885
- FR-A1- 2 805 675
- JP-A- 2008 029 090
- US-A- 4 132 460
- US-A1- 2013 064 697

## Beschreibung

Die Erfindung betrifft eine elektrische Maschine gemäß dem Oberbegriff des Patentanspruchs 1.

Eine solche elektrische Maschine wird unter anderem in Kraftfahrzeugen verwendet und ist aus der gattungsgemäßen EP 2 139 094 A1 bekannt. Die gegenwärtige Entwicklung elektrischer Maschinen führt zu immer komplexeren und kompakteren Bauweisen. Daher werden immer mehr Sensoren, beispielsweise Temperatursensoren und Magnetsensoren, und auch neue Baugruppen integriert, beispielsweise ein Aktuator für eine Reibkupplung. In dieser Hinsicht ergibt sich das Erfordernis die dafür notwendigen Kabel, Leitungen, Schläuche, etc. in elektrischen Maschinen platzsparend in den Gesamtaufbau zu integrieren, wobei eine besondere Schwierigkeit darin besteht diese von außen platzsparend in einen geschlossenen Aufnahmeraum innerhalb eines ringförmigen Stators einzuführen.

Weitere elektrische Maschinen sind in der JP 2008 029 090 A, der FR 2805 675 A1, der US 4 132 460, der EP 1 677 404 A2 und der US 2013 / 064697 A1 offenbart, wobei die Druckschrift EP 1 677 404 A2 als nächstliegender Stand der Technik angesehen wird und die Präambel des unabhängigen Anspruchs 1 offenbart.

Es stellt sich somit die Aufgabe, Kabel, Leitungen, Schläuche, etc. möglichst platzsparend in der elektrischen Maschine anzuordnen.

Diese vorstehende Aufgabe wird mittels einer elektrischen Maschine gemäß dem unabhängigen Patentanspruch gelöst.

Gemäß der Erfindung wird eine gattungsgemäße elektrische Maschine vorgeschlagen, bei der das Gussmaterial eine Kabeldurchführungsstruktur in Form eines Freiraums aufweist, der einen Durchgang durch das Gussmaterial darstellt, wobei ein Kabeldurchführungselement die Kabeldurchführungsstruktur ausbildet.

Eine auf diese Weise ausgeführte elektrische Maschine ermöglicht eine platzsparende Anordnung von Kabeln, Leitungen und Schläuchen innerhalb der elektrischen Maschine. Der speziell geschaffene Freiraum, der bei einem normalen Verguss nicht vorhanden ist, ermöglicht ein Durchführen und Anordnen von Kabeln, Leitungen oder Schläuchen innerhalb der Kabeldurchführungsstruktur. Die Position der Kabeldurchführungsstruktur in Umfangsrichtung am Stator ist je nach Anforderung frei wählbar, beispielsweise weit genug entfernt von einem Leistungsanschluss der Verbindungsleiter, um elektromagnetische Effekte größtmöglich zu verringern. Die dargestellte elektrische Maschine ist im Vergleich mit anderen Lösungen bauraumsparend.

Das Kabeldurchführungselement wird dabei an oder innerhalb des Verschaltungsbereichs des Leiterträgerelements angeordnet und bildet nach dem Vergießen den Freiraum der Kabeldurchführungsstruktur aus. Dadurch ist eine einfache, reproduzierbare und gleichmäßige Erzeugung der Kabeldurchführungsstruktur möglich.

Innerhalb der Kabeldurchführungsstruktur ist ein elektrisches Kabel angeordnet.

Es ist jedoch auch denkbar Schläuche, beispielsweise für eine Wasserkühlung, in der Kabeldurchführungsstruktur anzuordnen. Des Weiteren kann, bei Blickrichtung in eine Kabeldurchführungsrichtung, auch nur ein Teil des Kabel- bzw. Schlauchquerschnitts innerhalb der Vertiefung der Kabeldurchführungsstruktur, insbesondere der Wanne angeordnet sein.

Sofern nicht anders erwähnt, wird im Folgenden der Begriff Kabel stellvertretend für Leitung und Schlauch verwendet.

In einer vorteilhaften Ausführungsform ist die Kabeldurchführungsstruktur an einer Gussoberfläche angeordnet, die den Verbindungsleitern gegenüberliegt. Einer der Vorteile dieser Variante ist, dass das Kabel bei der Montage nicht in die Kabeldurchführungsstruktur eingezogen werden muss, sondern seitlich eingelegt werden kann. Dies ist unter anderem von Vorteil, wenn das Kabel bereits vor der Anordnung bzw. Positionierung innerhalb der Kabeldurchführungsstruktur an dem dafür vorgesehenen Sensor oder Bauteil angeschlossen bzw. mit diesem verbunden ist. Dadurch ist eine einfache Montage möglich.

Mit Vorteil ist die Kabeldurchführungsstruktur wannenförmig, d.h. mit einer offenen bzw. zumindest teilweise offenen Seite auszubilden.

Günstigerweise ist an dem Kabeldurchführungselement eine Lasche angeordnet, die in den Freiraum ragt. Bei einer Anordnung des Kabeldurchführungselements an der Vergussoberfläche ermöglicht die Lasche eine festgelegte Positionierung des Kabels innerhalb der Kabeldurchführungsstruktur, zumindest während der Montage.

In einer Weiterbildung ist an dem Kabeldurchführungselement, besonders bevorzugt an der Lasche eine Haltesicherung angeordnet. Diese Haltesicherung kann beispielsweise als Halterippe ausgebildet sein, die vorteilhafterweise zum Innenraum des Kabeldurchführungselements hinweist. Diese Halterippe ermöglicht ein Fixieren des Kabels bzw. des Schlauchs innerhalb des Kabeldurchführungselements. Durch die Fixierung wird sicher vermieden, dass das Kabel während der Montage oder im Betrieb aus der Kabeldurchführungsstruktur herausspringen oder herausfallen kann. Diese Fixierung ist besonders während der Montage von Vorteil, da ein herausgefallenes bzw. herausgesprungenes Kabel, das nicht an der gewünschten Position innerhalb oder an der Kabeldurchführungsstruktur angeordnet ist, durch den Anbau weiterer Bauteile abgeschert oder beschädigt werden kann.

Gemäß einer weiteren Ausführungsform hat es sich als vorteilhaft erwiesen, die Lasche nur über einen Teil des Kabeldurchführungselements auszubilden. Dies ist von Vorteil, wenn beispielsweise ein weiteres Bauteil einseitig und teilweise in den Bereich der Kabeldurchführungsstruktur eingreift, um das Kabel direkt an dem Kabeldurchführungselement aufzunehmen und weiterzuführen, beispielsweise mit einem Arm.

In einer weiteren vorteilhaften Ausbildungsvariante ist das Kabeldurchführungselement an dem Leiterträgerelement festgelegt. Eine mögliche Befestigung kann durch eine Klemmung des Kabeldurchführungselements zwischen zwei Wänden des Leiterträgerelements geschehen, es sind jedoch auch andere Befestigungsmöglichkeiten denkbar, wie beispielsweise kleben oder fixieren mit einem Clip. Es hat sich als vorteilhaft erwiesen, wenn das Leiterträgerelement entsprechende Aufnahmen, in die das Kabeldurchführungselement eingesetzt ist, und Aussparungen, durch die das Kabel geführt wird, aufweist. Die Position des Kabeldurchführungselements ist damit während des Einbringens des Vergussmaterials und auch danach festgelegt. Ein Festlegen der Position des Kabeldurchführungselements ist nicht zwangsweise notwendig. Wird das Kabeldurchführungselement während dem Einbringen des Vergussmaterials an der vorbestimmten Stelle, beispielsweise mit einem Haltearm, positioniert, ist es danach durch den Verguss fixiert. Ist das Kabeldurchführungselement an der Gussoberfläche angeordnet, besteht die Möglichkeit, dass sich dieses beispielsweises durch Vibrationen löst, weshalb es z.B. auch aus Bauraumgründen sinnvoll erscheint, mindestens ein weiteres Bauteil so anzuordnen, dass das Kabeldurchführungselement an seiner vorgegebenen Position zusätzlich festgelegt ist.

Vorteilhafterweise sind Montageabschnitte seitlich an dem Kabeldurchführungselement angeordnet, wobei die Montageabschnitte von dem Freiraum weg weisen. In bevorzugter Weise sind die Montageabschnitte im Wesentlichen parallel zueinander und liegen im Wesentlichen auf einer Ebene, die wiederum im Wesentlichen parallel zu und an der Gussoberfläche ausgerichtet ist. Die Montageabschnitte bilden gemeinsam mit der Lasche eine große Auflagefläche, um das Positionieren und das Eindrücken bzw. Einsetzen des Kabeldurchführungselements in das Leiterträgerelement zu erleichtern. Eine andere Anordnung der Montageabschnitte sowie eine andere Kombination der Montageabschnitten und der Lasche ist durchaus denkbar. Des Weiteren ist es vorteilhaft, wenn die Montageabschnitte so geformt sind, dass diese in entsprechend geformte Ausnehmungen des Leiterträgerelements eingreifen, damit nur eine korrekte Einbaulage des Kabeldurchführungselements möglich ist. Dies ist unter anderem dann von Vorteil, wenn andere Bauteile in das Kabeldurchführungselement eingreifen und dadurch die Einbaulage vorgegeben ist.

Es hat sich als vorteilhaft herausgestellt, dass das Kabeldurchführungselement aus einem Material hergestellt ist, das mindestens bis zur Schmelztemperatur des Gussmaterials formstabil ist. Dadurch sind Deformationen oder Beschädigungen des Kabeldurchführungselements während und nach dem Einbringen des Vergussmaterials ausgeschlossen.

Mit besonderem Vorteil kann das Kabeldurchführungselement als Kunststoffteil ausgeführt sein.

Gemäß einer weiteren bevorzugten Ausbildungsvariante ist vorgesehen, das Kabeldurchführungselement elektromagnetisch abschirmend auszuführen. Dies kann beispielsweise erreicht werden, wenn das Kabeldurchführungselement metallisch, z.B. aus Kupfer oder Aluminium ausgeführt ist. Dadurch werden elektromagnetische Effekte, die zwischen den Verbindungsleitern und dem durchgeführten Kabel auftreten minimiert. Da es nicht wünschenswert ist, innerhalb der Verschaltungseinrichtung blanke, leitende Bauteile einzusetzen, kann ein metallisches Kabeldurchführungselement mit einer isolierenden Schicht, z.B. aus Kunststoff oder Keramik, überzogen sein.

Nachfolgend wird die Erfindung anhand der beigefügten Figuren beispielhaft erläutert.

Es zeigen:
- Fig. 1: Stator einer elektrischen Maschine mit einer Kabeldurchführungsstruktur;
- Fig. 2: Bildausschnitt des Stators aus Fig. 1 mit einem Kabeldurchführungselement;
- Fig. 3a - d: ein Kabeldurchführungselement in verschiedenen Ansichten;
- Fig. 4: Bildausschnitt des Stators aus Fig. 1 mit Aussparungen eines Leiterträgerelements.

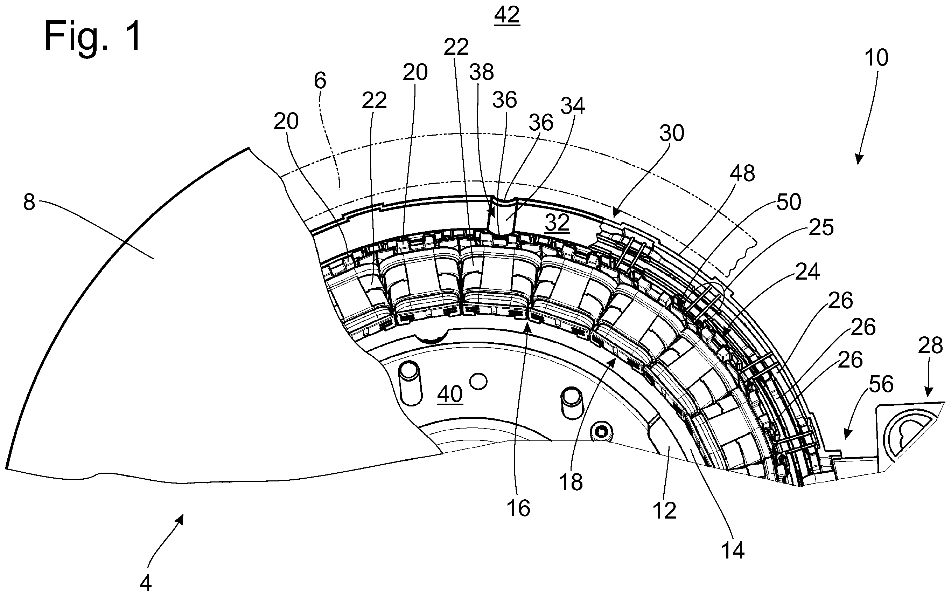

In Fig. 1 ist eine elektrische Maschine 4 in Außenläuferbauart mit einem Stator 10 und einem hier nur schematisch angedeuteten Rotor 6 dargestellt. Die Erfindung lässt sich außerdem auch in elektrische Maschinen anderer Ausführungsarten integrieren, beispielsweise Maschinen in Innenläuferbauart.

Der Stator 10 weist einen Statorträger 12 auf, an dem ein Statorblechpaket 14 angeordnet ist. Das Statorblechpaket 14 weist einen Jochbereich 16 und mehrere Statorzähne 18 auf (nicht sichtbar, die Anordnung am Stator ist jedoch angedeutet), die radial außen und gleichmäßig verteilt am Jochbereich 16 angeordnet sind. Des Weiteren weist der Stator 10 Isolierkörper 20 auf, die jeweils von einer Statorspule 22 umwickelt sind, wobei die Kombination eines Isolierkörpers 20 und einer Statorspule 22 ein Spulenpaket darstellt. Der Isolierkörper 20 kann unter anderem mehrteilig ausgeführt sein. Ein Spulenpaket ist jeweils an einem der Statorzähne 18 angeordnet. Die Wicklungsenden der Statorspulen 22 sind in eine Verschaltungseinrichtung 24 geführt, innerhalb derer die Statorspulen 22 in einem Verschaltungsbereich 25 über Verbindungsleiter 26 mit einer Leistungselektronik 28 verschaltet sind. Die Verbindungsleiter 26 sind in einem Leiterträgerelement 30 eingebettet, welches unter anderem als Gussform für einen Verguss 32 dient. An dem Stator 10 ist außerdem eine Abdeckplatte 8 (teilweise dargestellt) angeordnet, die den Stator 10 derart abdeckt und verschließt, dass eine möglichst geringe axiale Baubreite der elektrischen Maschine erreicht wird.

Der Verguss 32 weist eine Kabeldurchführungsstruktur 34 in Form eines Freiraums auf, dem Aussparungen 36 des Leiterträgerelements 30 zugeordnet sind. Die Kabeldurchführungsstruktur 34 und die Aussparungen 36 bilden eine Verbindung 38 zwischen einem Innenraum 40 und einem dazu radial angeordneten Außenraum 42 des Stators. Diese Verbindung 38 kann unter anderem dazu verwendet werden um Kabel, Leitungen oder Schläuche 44 in den Innenraum 40 des Stators 10 zu führen.

Bei dieser Ausführungsform ist die Kabeldurchführungsstruktur 34 an der Gussoberfläche, die den Verbindungsleitern 26 gegenüberliegt, angeordnet. Es besteht jedoch auch die Möglichkeit die Kabeldurchführungsstruktur 34 innerhalb des Vergusses 32 anzuordnen, damit diese vollständig vom Verguss 32 umschlossen ist.

Die Kabeldurchführungsstruktur 34 ist in dieser Variante wannenförmig ausgebildet, insbesondere halbkreisförmig, wobei innerhalb der Kabeldurchführungsstruktur 34 elektrische Kabel und Leitungen 44 angeordnet sind.

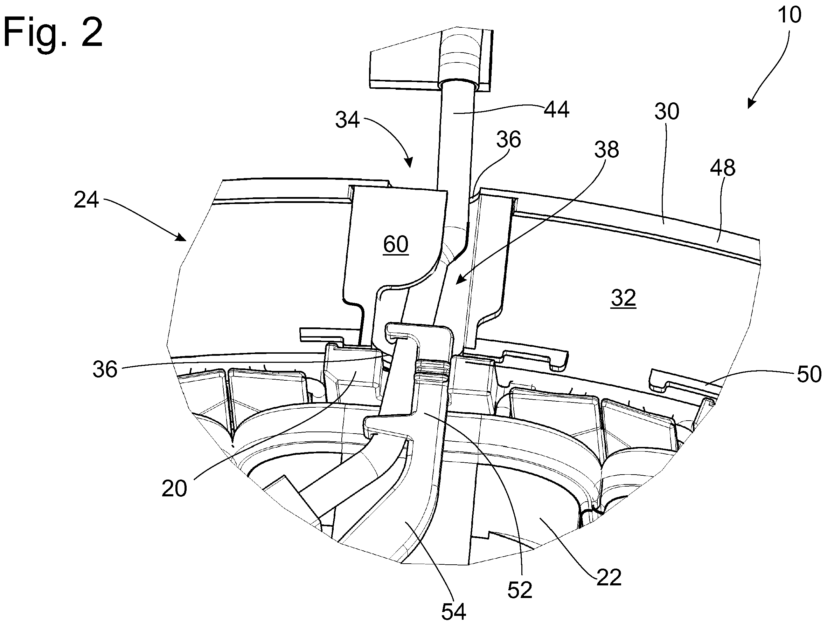

In einer zweiten Ausführungsvariante, gezeigt in Fig. 2, ist die Kabeldurchführungsstruktur 34 als Kabeldurchführungselement 60 ausgebildet. Dieses Kabeldurchführungselement 60 ist an dem Leiterträgerelement 30 angeordnet oder festgelegt und von Gussmaterial teilweise umschlossen. Dies ist von Vorteil, da die Kabeldurchführungsstruktur 34 unabhängig von dem Verguss 32 gleichmäßig reproduzierbar ist.

Das Kabeldurchführungselement 60 ist unter anderem zwischen Seitenwänden 48,50 des Leiterträgerelements 30 eingeklemmt, die ausreichend zum Verschaltungsbereich 25 hin nach innen gekippt sind.

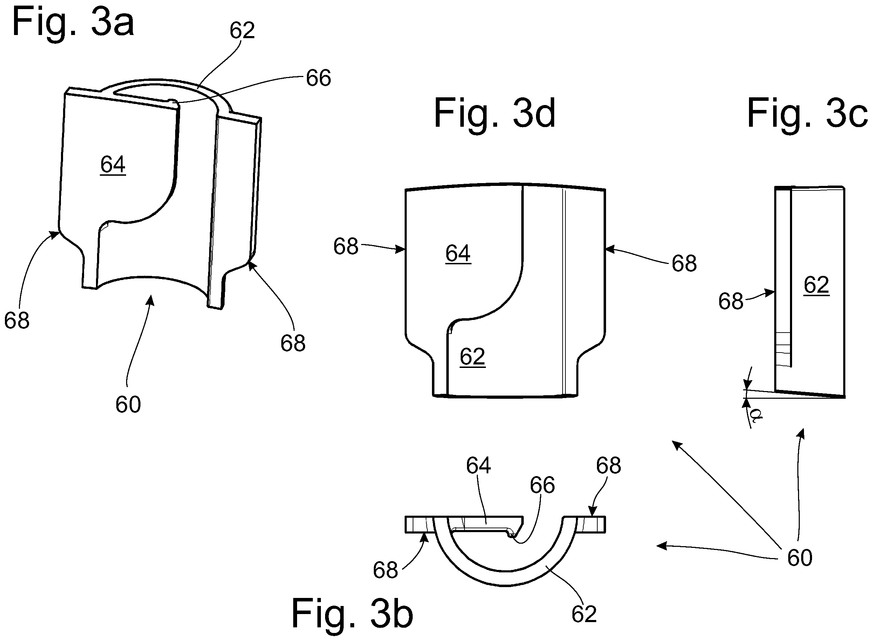

Das Kabeldurchführungselement 60 weist einen Grundkörper 62 auf, in diesem Fall wannenförmig, insbesondere halbkreisförmig. An diesem Grundkörper 62 sind im Folgenden weitere, für diese Anwendung vorteilhafte Elemente angeordnet, dargestellt in den Fig. 2 und 3a - d, wobei es von dem konkreten Anwendungsfall abhängt, welche dieser Ausgestaltungen vorteilhaft sind.

An dem Grundkörper 62 ist eine Lasche 64 angeordnet, die in den Freiraum des Kabeldurchführungselements ragt. Diese Lasche 64 dient unter anderem als Abdeckung, hinter der das Kabel 44 geschützt eingelegt ist.

Des Weiteren ist an der Lasche 64 eine Haltesicherung in Form einer Halterippe 66 angeordnet, die zum Grundkörper 62 hinweist und ein in der Kabeldurchführungsstruktur 34 angeordnetes Kabel 44 zwischen Grundkörper 62, Lasche 64 und Halterippe 66 festhält. Ein derart positioniertes Kabel 44 ist innerhalb des Kabeldurchführungselements 60 fixiert. Dies ist besonders bei der Montage von Vorteil, da ein einmal positioniertes Kabel 44 an dem vorgegebenen Ort verharrt und nicht mehr durch den Anbau weiterer Elemente, beispielsweise der Abdeckplatte, abgeschert oder beschädigt werden kann.

An dem Grundkörper 62 sind außerdem Montageabschnitte 68 angeordnet, die vom Grundkörper 64 wegweisen. Die Montageabschnitte 68 sind im Wesentlichen parallel zueinander und im Wesentlichen parallel zur Lasche 64 angeordnet um eine große Auflagefläche zu erzeugen. Diese Auflagefläche ermöglicht ein einfaches Eindrücken in passende Aufnahmen 46 des Leiterträgerelements 30. Dabei ist die Auflagefläche, bestehend aus Lasche 64 und Montageabschnitten 68 im Wesentlichen parallel zur und an der Gussoberfläche angeordnet.

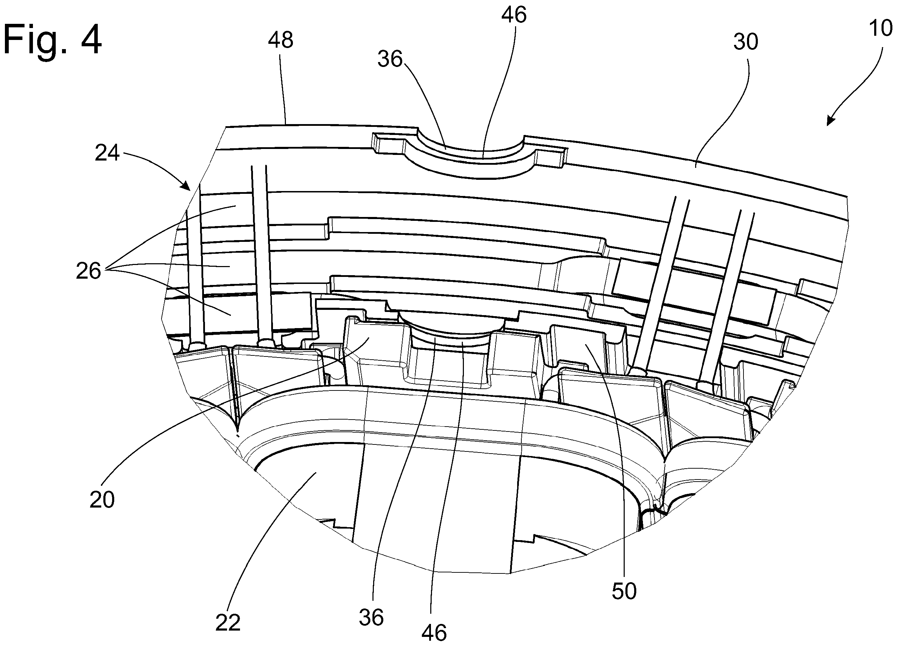

Um eine eindeutige Einbaurichtung vorzugeben, sind Montageabschnitte 68 nur über einen Teil der Länge des Kabeldurchführungselements 60 ausgebildet. Die entsprechend ausgeführten Aufnahmen 46 des Leiterträgerelements 30, dargestellt in Fig. 4, legen in Kombination mit der Ausführung der Montageabschnitte 68 eine eindeutige Einbaurichtung fest.

Eine Einbaurichtung kann unter anderem dann vorgegeben sein, wenn die Lasche 64 nur über einen Teil des Kabeldurchführungselements 60 ausgebildet ist. Dies ist unter anderem dann der Fall, wenn ein Bauteil, beispielsweise ein Arm 52 eines Temperatursensorhalters 54, teilweise in das Kabeldurchführungselement 60 eingreift, um das Kabel 44 zu übernehmen und weiterzuführen.

Da die Seitenwände 48, 50 zueinander, also zu dem Verschaltungsbereich 25 hin gekippt sind, ist zum einfachen Einsetzen des Kabeldurchführungselements 60 der im montierten Zustand innen liegende Kontaktbereich um einen Winkel α abgeschrägt (Fig. 3c). Das Kabeldurchführungselement 60 wird bei der Montage zuerst mit der abgeschrägten Kante an der passenden Aufnahme 46 des Leiterträgerelements 30 angesetzt und danach in die Aufnahme 46 der gegenüberliegenden Seite eingedrückt. Zusätzlich dazu ist der, dem abgeschrägten Kontaktbereich gegenüberliegende Kontaktbereich des Kabeldurchführungselements 60 an die Krümmung des Leiterträgerelements 30 angepasst (Fig. 3d).

Damit das Kabeldurchführungselement 60 während dem Einbringen des Gussmaterials keine Deformation oder Beschädigung erfährt, ist es von Vorteil ein Material zu verwenden, das auch bei der Schmelztemperatur des Gussmaterials formstabil ist. Das Material kann unter anderem das Selbe sein, welches für das Leiterträgerelement 30 verwendet wird.

In einer bevorzugten Variante wird das Kabeldurchführungselement 60 als Kunststoffteil ausgeführt.

Das Kabeldurchführungselement 60 kann alternativ elektromagnetisch abschirmend ausgeführt sein. Dadurch werden elektromagnetische Effekte zwischen den Verbindungsleitern 26 und den Kabeln 44, die innerhalb des Kabeldurchführungselements 60 angeordnet sind, verringert.

### Bezugszeichen

- 4: Elektrische Maschine
- 6: Rotor
- 8: Abdeckung
- 10: Stator
- 12: Statorträger
- 14: Statorblechpaket
- 16: Jochbereich
- 18: Statorzähne
- 20: Isolierkörper
- 22: Statorspule
- 24: Verschaltungseinrichtung
- 25: Verschaltungsbereich
- 26: Verbindungsleiter
- 28: Leistungselektronik
- 30: Leiterträgerelement
- 32: Verguss
- 34: Kabeldurchführungsstruktur / Freiraum
- 36: Aussparungen
- 38: Verbindung
- 40: Innenraum
- 42: Außenraum
- 44: Kabel / Leitung / Schlauch
- 46: Aufnahme
- 48: Seitenwand
- 50: Seitenwand
- 52: Arm
- 54: Temperatursensorhalter
- 56: Leistungsanschluss
- 60: Kabeldurchführungselement
- 62: Grundkörper
- 64: Lasche
- 66: Haltesicherung / Halterippe
- 68: Montageabschnitt
- α: Winkel

## Patentansprüche

1. Elektrische Maschine (4) umfassend
- einen Rotor (6),
- einen Stator (10) mit daran angeordneten Statorspulen (22),
- eine Verschaltungseinrichtung (24) mit einem Leiterträgerelement (30) und mit in diesem eingebetteten Verbindungsleitern (26),
- wobei die Wicklungsdrahtenden der Statorspulen (22) in die Verschaltungseinrichtung (24) geführt sind, innerhalb derer die Statorspulen (22) in einem Verschaltungsbereich (25) über die Verbindungsleiter (26) mit einer Leistungselektronik (28) verschaltet sind,
- wobei der Verschaltungsbereich (25) mit einem isolierenden Gussmaterial gefüllt ist,
**dadurch gekennzeichnet, dass** das isolierende Gussmaterial eine wannenförmige Kabeldurchführungsstruktur (34) in Form eines Freiraums (34) aufweist, der einen Durchgang durch das isolierende Gussmaterial darstellt, wobei ein Kabeldurchführungselement (60) die wannenförmige Kabeldurchführungsstruktur (34) ausbildet und ein elektrisches Kabel (44) innerhalb des Freiraums (34) der wannenförmigen Kabeldurchführungsstruktur (34) angeordnet ist, wobei das Kabeldurchführungselement (60) an dem Leiterträgerelement (30) angeordnet und vom isolierenden Gussmaterial teilweise umschlossen ist.

2. Elektrische Maschine (4) nach Anspruch 1, **dadurch gekennzeichnet, dass** die wannenförmige Kabeldurchführungsstruktur (34) an einer isolierenden Gussoberfläche angeordnet ist, die den Verbindungsleitern (26) gegenüberliegt.

3. Elektrische Maschine (4) nach Anspruch 2, **dadurch gekennzeichnet, dass** die wannenförmige Kabeldurchführungsstruktur (34) halbkreisförmig ausgebildet ist.

4. Elektrische Maschine (4) nach einem der Ansprüche 1 bis 3, **dadurch gekennzeichnet, dass** ein elektrisches Kabel (44) innerhalb des Freiraums (34) der wannenförmigen Kabeldurchführungsstruktur (34) fixiert ist.

5. Elektrische Maschine (4) nach einem der Ansprüche 1 bis 4, **dadurch gekennzeichnet, dass** an dem Kabeldurchführungselement (60) eine Lasche (64) angeordnet ist, die in den Freiraum des Kabeldurchführungselements (60) ragt.

6. Elektrische Maschine (4) nach einem der Ansprüche 1 bis 5, **dadurch gekennzeichnet, dass**
das Kabeldurchführungselement (60) eine Haltesicherung (66) aufweist.

7. Elektrische Maschine (4) nach einem der Ansprüche 1 bis 6, **dadurch gekennzeichnet, dass** an dem Kabeldurchführungselement Montageabschnitte (68) angeordnet sind.

8. Elektrische Maschine (4) nach Anspruch 7, **dadurch gekennzeichnet, dass** die Lasche (64) und die Montageabschnitte (68) im Wesentlichen in einer Ebene angeordnet sind, wobei die Ebene im Wesentlichen parallel zur isolierenden Gussoberfläche ausgerichtet ist.

9. Elektrische Maschine (4) nach einem der Ansprüche 1 bis 8, **dadurch gekennzeichnet, dass** das Kabeldurchführungselement (60) an dem Leiterträgerelement (30) festgelegt ist.

10. Elektrische Maschine (4) nach einem der Ansprüche 1 bis 9, **dadurch gekennzeichnet, dass** das Kabeldurchführungselement (60) aus einem Material hergestellt ist, das mindestens bis zur Schmelztemperatur des isolierenden Gussmaterials formstabil ist.

11. Elektrische Maschine (4) nach einem der Ansprüche 1 bis 10, **dadurch gekennzeichnet, dass** das Kabeldurchführungselement (60) als Kunststoffteil ausgeführt ist.

12. Elektrische Maschine (4) nach einem der Ansprüche 1 bis 11, **dadurch gekennzeichnet, dass** das Kabeldurchführungselement (60) elektromagnetisch abschirmend ausgeführt ist.

## Claims

1. Electrical machine (4), comprising
- a rotor (6),
- a stator (10) with stator coils (22) arranged on it,
- an interconnection device (24) with a conductor carrier element (30) and with connecting conductors (26) which are embedded in the said conductor carrier element,
- wherein the winding wire ends of the stator coils (22) are guided into the interconnection device (24) within which the stator coils (22) are interconnected to a power electronics system (28) by means of the connecting conductors (26) in an interconnection region (25),
- wherein the interconnection region (25) is filled with an insulating casting material,
**characterized in that** the insulating casting material has a trough-like cable bushing structure (34) in the form of a clearance (34) which constitutes a passage through the insulating casting material, wherein a cable bushing element (60) forms the trough-like cable bushing structure (34) and an electrical cable (44) is arranged within the clearance (34) of the trough-like cable bushing structure (34), wherein the cable bushing element (60) is arranged on the conductor carrier element (30) and is partially surrounded by the insulating casting material.

2. Electrical machine (4) according to Claim 1, **characterized in that** the trough-like cable bushing structure (34) is arranged on an insulating casting surface which is situated opposite the connecting conductors (26).

3. Electrical machine (4) according to Claim 2, **characterized in that** the trough-like cable bushing structure (34) is of semicircular design.

4. Electrical machine (4) according to one of Claims 1 to 3, **characterized in that** an electrical cable (44) is fixed within the clearance (34) of the trough-like cable bushing structure (34).

5. Electrical machine (4) according to one of Claims 1 to 4, **characterized in that** a lug (64) is arranged on the cable bushing element (60) and protrudes into the clearance of the cable bushing element (60).

6. Electrical machine (4) according to one of Claims 1 to 5, **characterized in that** the cable bushing element (60) has a securing holder (66).

7. Electrical machine (4) according to one of Claims 1 to 6, **characterized in that** mounting sections (68) are arranged on the cable bushing element.

8. Electrical machine (4) according to Claim 7, **characterized in that** the lug (64) and the mounting sections (68) are arranged substantially in one plane, wherein the plane is oriented substantially parallel in relation to the insulating casting surface.

9. Electrical machine (4) according to one of Claims 1 to 8, **characterized in that** the cable bushing element (60) is secured to the conductor carrier element (30).

10. Electrical machine (4) according to one of Claims 1 to 9, **characterized in that** the cable bushing element (60) is produced from a material which is dimensionally stable at least up to the melting point of the insulating casting material.

11. Electrical machine (4) according to one of Claims 1 to 10, **characterized in that** the cable bushing element (60) is designed as a plastic part.

12. Electrical machine (4) according to one of Claims 1 to 11, **characterized in that** the cable bushing element (60) is designed such that it provides electromagnetic shielding.

## Revendications

1. Machine électrique (4) comprenant
- un rotor (6),
- un stator (10) sur lequel sont disposés des bobines de stator (22),
- un dispositif de câblage (24) comprenant un élément de support de conducteurs (30) et des conducteurs de connexion (26) incorporés dans celui-ci,
- les extrémités de fil d'enroulement des bobines de stator (22) étant guidées dans le dispositif de câblage (24) dans lequel les bobines de stator (22) sonnt câblées à une électronique de puissance (28) dans une zone de câblage (25) par le biais des conducteurs de connexion (26),
- la zone de câblage (25) étant remplie d'une matière de moulage isolante,
**caractérisée en ce que** la matière de moulage isolante comporte une structure de traversée de câble (34) en forme de cuvette se présentant sous la forme d'un espace libre (34) qui représente une traversée à travers la matière de moulage isolante, un élément de traversée de câble (60) formant la structure traversée de câble (34) en forme de cuvette et un câble électrique (44) étant disposé dans l'espace libre (34) de la structure de guidage de câble (34) en forme de cuvette, l'élément de traversée de câble (60) étant disposé sur l'élément de support de conducteurs (30) et étant partiellement entouré par la matière de moulage isolante.

2. Machine électrique (4) selon la revendication 1, **caractérisée en ce que** la structure de traversée de câble (34) en forme de cuvette est disposée sur une surface de moulage isolante opposée aux conducteurs de connexion (26).

3. Machine électrique (4) selon la revendication 2, **caractérisée en ce que** la structure de traversée de câble (34) en forme de cuvette est semi-circulaire.

4. Machine électrique (4) selon l'une des revendications 1 à 3, **caractérisée en ce qu'**un câble électrique (44) est fixé à l'intérieur de l'espace libre (34) de la structure de traversée de câble (34) en forme de cuvette.

5. Machine électrique (4) selon l'une des revendications 1 à 4, **caractérisée en ce qu'**une attache (64) est disposée sur l'élément de traversée de câble (60), laquelle fait saillie dans l'espace libre de l'élément de traversée de câble (60).

6. Machine électrique (4) selon l'une des revendications 1 à 5, **caractérisée en ce que**
l'élément de traversée de câble (60) comporte une sécurité de retenue (66).

7. Machine électrique (4) selon l'une des revendications 1 à 6, **caractérisée en ce que** des parties de montage (68) sont disposées sur l'élément de traversée de câble.

8. Machine électrique (4) selon la revendication 7, **caractérisée en ce que** l'attache (64) et les parties de montage (68) sont disposées sensiblement dans un plan, le plan étant orienté sensiblement parallèlement à la surface de moulage isolante.

9. Machine électrique (4) selon l'une des revendications 1 à 8, **caractérisée en ce que** l'élément de traversée de câble (60) est fixé à l'élément de support de conducteurs (30).

10. Machine électrique (4) selon l'une des revendications 1 à 9, **caractérisée en ce que** l'élément de traversée de câble (60) est réalisé en une matière qui est de forme stable au moins jusqu'à la température de fusion de la matière de moulage isolante.

11. Machine électrique (4) selon l'une des revendications 1 à 10, **caractérisée en ce que** l'élément de traversée de câble (60) est conçu comme une pièce en matière plastique.

12. Machine électrique (4) selon l'une des revendications 1 à 11, **caractérisée en ce que** l'élément de traversée de câble (60) est conçu comme un blindage électromagnétique.
